# EUROPEAN PATENT APPLICATION

(11) **EP 4 492 062 A1**
(43) Date of publication of application: **15.01.2025**
(21) Application number: 22930669.1
(22) Date of filing: 23.12.2022
(51) Int. Cl.: G01N 35/00, G01N 35/04, B65D 81/18, B65G 35/00, B65D 25/54, B65G 47/90, B65D 25/52

(54) **SAMPLE REFRIGERATION STORAGE DEVICE AND SAMPLE FLOW-LINE ANALYSIS SYSTEM**

(30) Priority: 11.03.2022 CN 202210242156; 11.03.2022 CN 202220538223 U
(71) Applicant: Autobio Labtec Instruments Co., Ltd., Zhengzhou, Henan 450016 (CN)
(72) Inventor: XU, Can, Zhengzhou, Henan 450016 (CN); ZHAO, Peng, Zhengzhou, Henan 450016 (CN); GE, Shaohua, Zhengzhou, Henan 450016 (CN); NIU, Wenming, Zhengzhou, Henan 450016 (CN); CHEN, Wenchao, Zhengzhou, Henan 450016 (CN); HOU, Jianping, Zhengzhou, Henan 450016 (CN); WANG, Chao, Zhengzhou, Henan 450016 (CN); LIU, Cong, Zhengzhou, Henan 450016 (CN)
(74) Representative: V.O.
(86) International application number: PCT/CN2022/141642
(87) International publication number: WO 2023/169050

(57) **Abstract**

A sample refrigeration storage device and a sample flow-line analysis system. The sample refrigeration storage device comprises: a refrigeration storage area (100), wherein the refrigeration storage area (100) comprises a storage area frame (101), a refrigeration placement rack (102) and a first refrigeration mechanism (103); a refrigeration operation area (200), wherein the refrigeration operation area (200) comprises an operation area frame (201), a sample sorting mechanism (202), a sample rack-loading mechanism (104) and a second refrigeration mechanism (203), the operation area frame (201) being in communication with the storage area frame (101) to form a closed cavity, and the sample sorting mechanism (202) and the sample rack-loading mechanism (104) cooperating to offload samples to be offloaded from the refrigeration placement rack (102) through an access opening, and to load samples to be loaded onto the refrigeration placement rack (102) through the access opening; a sample transport track (300); and a central control system. Since the sample sorting mechanism (202) is located in the refrigeration operation area (200), when a sample is retained, the second refrigeration mechanism (203) keeps the sample in a low-temperature environment, which reduces the risk of corruption failure of the sample, reduces the number of times samples are collected, and improves the efficiency of sample testing.

## Description

This application claims the priorities to Chinese Patent Application No. 202210242156.5, titled "SAMPLE REFRIGERATION STORAGE DEVICE AND SAMPLE FLOW-LINE ANALYSIS SYSTEM", filed with the China National Intellectual Property Administration on March 11, 2022; and Chinese Patent Application No. CN202220538223.3, titled "SAMPLE REFRIGERATION STORAGE DEVICE AND SAMPLE FLOW-LINE ANALYSIS SYSTEM", filed with the China National Intellectual Property Administration on March 11, 2022, the entire disclosures of which are incorporated herein by reference.

### FIELD

This application relates to the technical field of sample refrigeration storage, and in particular to a sample refrigeration storage device and a sample workflow analysis system.

### BACKGROUND

At present, automated testing workflows are commonly used in medical laboratories for relevant medical tests of samples. When the test results need to be evaluated and confirmed by a doctor or the sample test takes a long time, it is necessary to store the sample in a refrigeration storage device to reduce the failure of the sample due to spoiling.

A sample collection module of the conventional sample refrigeration storage device is generally provided outside the refrigeration storage module, which causes the sample to be stranded on the sample collection module for a long time, and thus the sample may have been spoiled and failed before entering the refrigeration storage module, resulting in that effective and precise sample testing cannot be carried out, due to this, it is usually needed to collect samples repeatedly in clinical application, which reduces the efficiency of sample testing.

Therefore, a technical problem to be addressed by those skilled in the art is to improve the efficiency of sample testing.

### SUMMARY

In view of this, an object of the present application to provide a sample refrigeration storage device, to improve the efficiency of sample testing.

In order to achieve the above object, the following technical solutions are provided according to the present applications.

A sample refrigeration storage device includes:
a refrigerated storage area, including a storage area frame, a refrigerated placement shelf and a first refrigeration mechanism configured for refrigerating samples, where the refrigerated placement shelf is arranged in the storage area frame; a side-by-side door structure is arranged at one side of the storage area frame, and the side-by-side door structure is provided with a first transparent window;
a refrigerated operation area, including an operation area frame in communication with the storage area frame, a sample sorting mechanism configured for sorting and transferring the samples, a sample rack loading mechanism configured for transferring a sample rack, and a second refrigeration mechanism configured for refrigerating the samples; a side-by-side door structure is arranged at one side of the operation area frame, and the side-by-side door structure is provided with a first transparent window; and the operation area frame and the storage area frame are in communication with each other to form a closed chamber, an entrance or exit opening is provided at one side of the operation area frame away from the refrigerated storage area, and the sample sorting mechanism and the sample rack loading mechanism are configured to be in cooperation with each other to unload a to-be-unloaded sample from the refrigerated placement shelf through the entrance or exit opening, and to load a to-be-loaded sample onto the refrigerated placement shelf through the entrance or exit opening;
a sample transport rail configured for transporting the samples, and the sample transport rail is provided on one side of the refrigerated operation area where the entrance or exit opening is located; and
a central control system being electrically connected to the sample sorting mechanism and the sample rack loading mechanism.

Preferably, in the above sample refrigeration storage device, the sample rack loading mechanism is arranged at one side of the operation area frame close to the refrigerated storage area, and the sample rack loading mechanism includes a fixing assembly, a translation assembly and a sample rack pick-and-place assembly; where
the fixing assembly includes a first guide rail provided along a first direction, and the first guide rail includes two linear guide rails being parallel to each other, namely a first linear guide rail and a second linear guide rail; the translation assembly includes a second guide rail being in slidable cooperation with the first linear guide rail and the second linear guide rail, where the second guide rail is provided along a second direction, and the translation assembly is connected to the sample rack pick-and-place assembly, the translation assembly can drive the sample rack pick-and-place assembly to slide along the second guide rail; and the sample rack pick-and-place assembly includes a third guide rail provided along a third direction and a sample rack grabbing manipulator for grabbing and transferring the sample rack, and the sample rack grabbing manipulator is arranged on the third guide rail in a slidable manner; an included angle between any two of the first direction, the second direction and the third direction is greater than 0° and smaller than or equal to 90°.

Preferably, in the above sample refrigeration storage device, the sample sorting mechanism includes a lifting and carrying assembly, and the lifting and carrying assembly includes an installation base frame and a lifting drive structure for driving the installation base frame to move up and down.

Preferably, in the above sample refrigeration storage device, the sample sorting mechanism further includes a sample storage assembly, wherein the sample storage assembly includes a support plate, a first sample rack temporary storage area and a second sample rack temporary storage area both provided on the support plate.

Preferably, in the above sample refrigeration storage device, the first sample rack temporary storage area includes a first sample temporary storage rack for temporarily storing the to-be-loaded sample and a first information recognizer provided on the first sample temporary storage rack; the second sample rack temporary storage area includes a second sample temporary storage rack for temporarily storing the to-be-unloaded sample and a second information recognizer provided on the second sample temporary storage rack; and the first information recognizer and the second information recognizer are both electrically connected to the central control system.

Preferably, in the above sample refrigeration storage device, the sample sorting mechanism further includes an automatic interaction assembly configured for transporting the to-be-loaded sample into and the to-be-unloaded sample out of the refrigerated storage area.

Preferably, in the above sample refrigeration storage device, the automatic interaction assembly includes an interactive drive motor, an interactive driving wheel being connected to an output shaft of the interactive drive motor, an interactive driven wheel, an interactive belt connecting the interactive driving wheel and the interactive driven wheel, an interactive installation plate being connected to the interactive belt, an interactive slider connected to the interactive installation plate, and an interactive guide rail being in sliding fit with the interactive slider, wherein a sample interaction placement shelf for placing the samples is provided at one end of the interactive installation plate close to the entrance or exit opening.

Preferably, in the above sample refrigeration storage device, the sample sorting mechanism further includes a jacking assembly for pushing up a sample tube and a first mechanical gripper assembly for grabbing and transferring the sample tube, where the jacking assembly and the first mechanical gripper assembly are located in the operation area frame.

Preferably, in the above sample refrigeration storage device, the sample sorting mechanism further includes a second mechanical gripper assembly being arranged at an outer side of the operation area frame, and the second mechanical gripper assembly is located above the sample transport rail.

Preferably, in the above sample refrigeration storage device, the second mechanical gripper assembly includes a gripper structure, a lifting structure for driving the gripper structure to move up and down, and a rotating structure for driving the gripper structure to rotate; where the gripper structure includes gripping fingers that can open and close, a cam for driving the gripping fingers to open and close, and a gripping finger driver for driving the cam to rotate.

Preferably, in the above sample refrigeration storage device, the refrigerated operation area further includes an automatic door opening and closing mechanism arranged at the entrance or exit opening of the operation area frame.

Preferably, in the above sample refrigeration storage device, the automatic door opening and closing mechanism includes a second lead screw motor, a guide plate, a driving slide rail, a driven slide rail, a sealing door body and a rotating member, where
the second lead screw motor is electrically connected to the central control system, the driven slide rail is provided on a nut of the second lead screw motor, and the driven slide rail is slidably connected to the driving slide rail via a driving slider; a length direction of the driving slide rail and a length direction of a lead screw of the lead screw motor are provided along a fourth direction; a driven slider is slidably provided on the driven slide rail, and the sealing door body is arranged at one side of the driven slider; a length direction of the driven slide rail is provided along a fifth direction, and an included angle between the fourth direction and the fifth direction is greater than 0° and smaller than or equal to 90°; the guide plate is provided with a guide groove corresponding to an opening and closing trajectory of the sealing door body, and the rotating member is arranged at one side of the driven slider away from the sealing door body, and the rotating member can slide along the guide groove.

Preferably, in the above sample refrigeration storage device, the sample transport rail includes a sample feeding rail for receiving and transporting a sample holder with sample tube, an empty holder buffer rail configured for buffering an empty sample holder, a third information recognizer configured for recognizing sample information, and a sample discarding assembly for collecting discarded samples; the sample tube is provided with a sample recognition code for displaying the sample information, and the sample holder is provided with a sample holder recognition code for displaying sample holder information; the third information recognizer can read and bind the sample label and the sample holder label, and the information recognizer is electrically connected to the central control system.

A sample workflow analysis system includes the above sample refrigeration storage device.

In the use of the sample refrigeration storage device according to the present application, when the sample transport rail transports the to-be-loaded sample to the entrance or exit opening of the refrigerated operation area, the central control system controls the sample sorting mechanism to cooperate with the sample rack loading mechanism, to load the to-be-loaded sample onto the refrigerated placement shelf through the entrance or exit opening; when the sample needs to be unloaded, the central control system controls the sample sorting mechanism to cooperate with the sample rack loading mechanism, to unload the to-be-unloaded sample to the sample transport rail through the entrance or exit opening. The refrigerated storage area and the refrigerated operation area are accessible by opening the side-by-side door structure and a door panel, which facilitates fault treatment, and operation situations of the refrigerated storage area and the refrigerated operation area can be observed through the first transparent window and the second transparent window. Since the sample sorting mechanism according to the present application is located in the refrigerated operation area, and the refrigerated operation area includes the second refrigeration mechanism configured for refrigerating the samples, even if a sample is stranded on the sample sorting mechanism, the sample is always in a low temperature environment, which reduces the situation where the sample becomes spoiled and ineffective. In addition, since the operation area frame of the refrigerated operation area is in communication with the storage area frame of the refrigerated storage area to form a closed chamber, that is, a sealed refrigerated chamber is formed, so that the heat exchange between the samples and the outside of the refrigerated storage area is reduced, which further reduces the situation where sample becomes spoiled and ineffective, thereby the effectiveness and accuracy of sample testing are improved, the number of times for sample collection is reduced, and the efficiency of sample testing is improved in clinical application.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view showing the external structure of a sample refrigeration storage device according to an embodiment of the present application;
FIG. 2 is a schematic view showing the structure of a refrigerated operation area according to an embodiment of the present application;
FIG. 3 is a schematic view showing the structure of a refrigerated storage area according to an embodiment of the present application;
FIG. 4 is a schematic view showing the structure of a side-by-side door structure according to an embodiment of the present application; and
FIG. 5 is a schematic view showing the structure of an automatic door opening and closing mechanism according to an embodiment of the present application.

### Reference numerals:

| | | | |
|---|---|---|---|
| 100 | refrigerated storage area, | 101 | storage area frame, |
| 1011 | side-by-side door structure, | 1011-a | first transparent window, |
| 102 | refrigerated placement shelf, | 103 | first refrigeration mechanism, |
| 104 | sample rack loading mechanism, | 1041 | fixing assembly, |
| 1041-a | first guide rail, | 1042 | translation assembly, |
| 1042-a | second guide rail, | | |
| 1043 | sample rack pick-and-place assembly, | | |
| 1043-a | third guide rail, | 200 | refrigerated operation area, |
| 201 | operation area frame, | 2011 | door panel, |
| 2011-a | second transparent window, | 202 | sample sorting mechanism, |
| 2021 | lifting and carrying assembly, | 2021-a | installation base frame, |
| 2021-b | lifting drive structure, | 2022 | sample storage assembly, |
| 2022-a | support plate, | | |
| 2022-b | first sample rack temporary storage area, | | |
| 2022-c | second sample rack temporary storage area, | | |
| 2023 | automatic interaction assembly, | 2024 | jacking assembly, |
| 2025 | first mechanical gripper assembly, | | |
| 2026 | second mechanical gripper assembly, | | |
| 2026-a | gripper structure, | 2026-b | lifting structure, |
| 2026-c | rotating structure, | 203 | second refrigeration mechanism, |
| 204 | automatic door opening and closing mechanism, | | |
| 2041 | second lead screw motor, | 2042 | guide plate, |
| 2043 | driving slide rail, | 2044 | driven slide rail, |
| 2045 | sealing door body, | 2046 | rotating member, |
| 300 | sample transport rail, | 301 | sample feeding rail, |
| 302 | empty holder buffer rail, | 303 | third information recognizer, |
| 304 | sample discarding assembly, | X | first direction, |
| Y | second direction, | Z | third direction, |
| α | fourth direction, | β | fifth direction. |

### DETAILED DESCRIPTION OF THE EMBODIMENTS

In view of this, a core of the present application is to provide a sample refrigeration storage device to improve the efficiency of sample testing.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

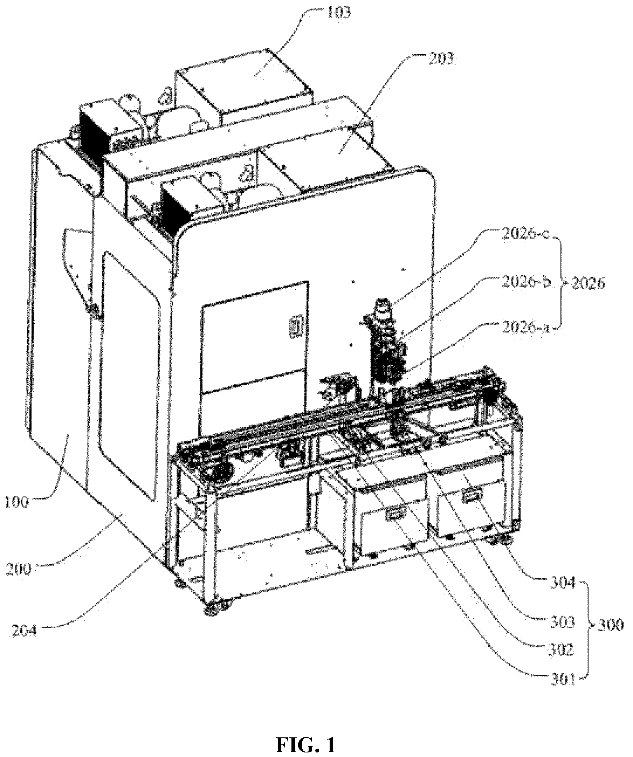

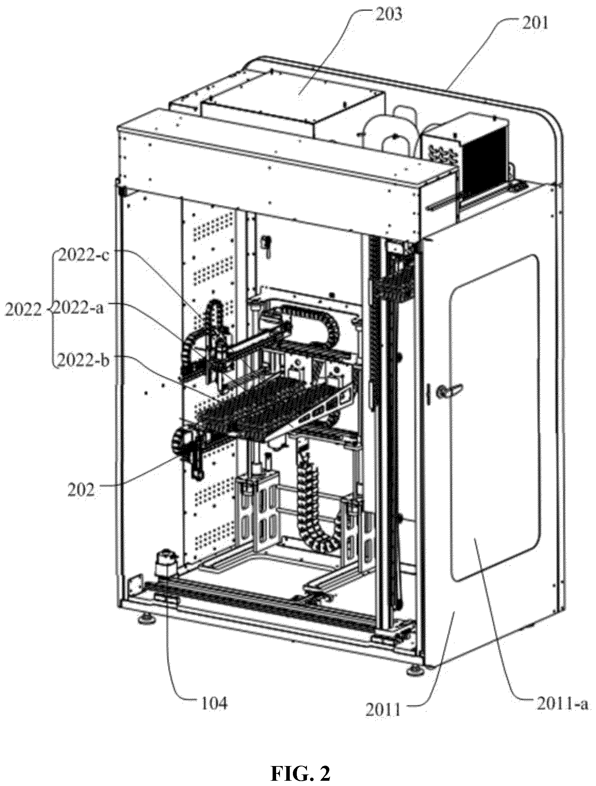

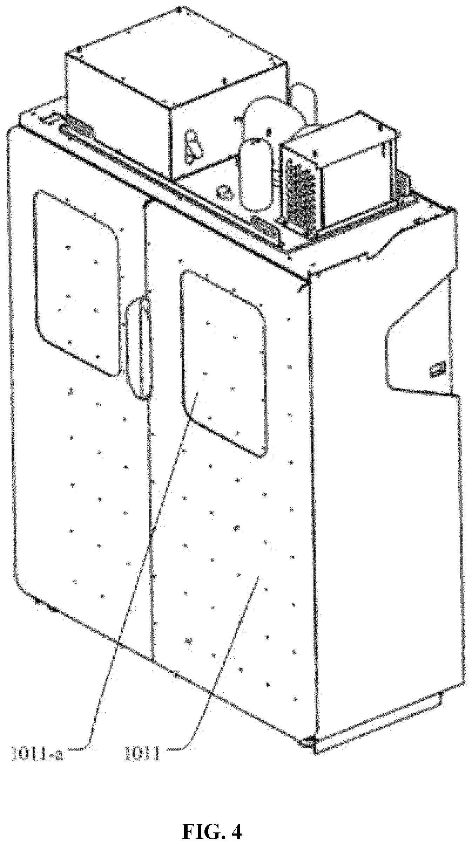

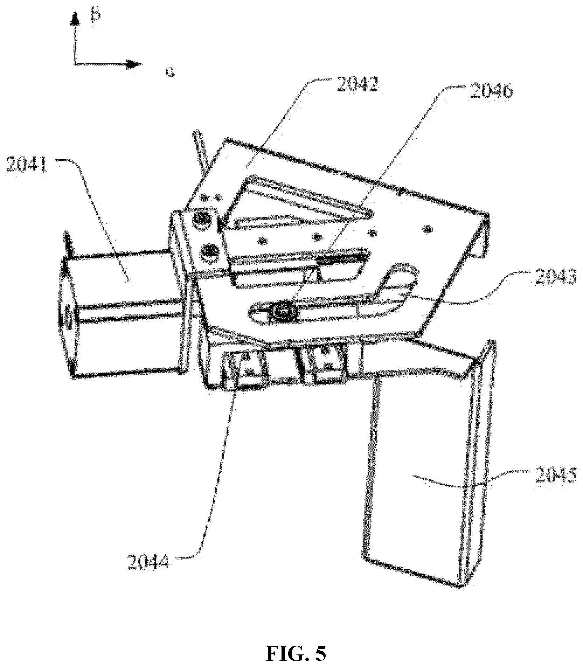

As shown in FIG. 1 to FIG. 5, a sample refrigeration storage device is provided according to an embodiment of the present application, including a refrigerated storage area 100, a refrigerated operation area 200, a sample transport rail 300 and a central control system.

The refrigerated storage area 100 includes a storage area frame 101, a refrigerated placement shelf 102, and a first refrigeration mechanism 103 configured for refrigerating samples, where the refrigerated placement shelf 102 is arranged in the storage area frame 101. The refrigerated operation area 200 includes an operation area frame 201 being in communication with the storage area frame 101, a sample sorting mechanism 202 configured for sorting and transferring the samples, a sample rack loading mechanism 104 configured for transferring a sample rack, and a second refrigeration mechanism 203 configured for refrigerating the samples. The operation area frame 201 and the storage area frame 101 are in communication with each other to form a closed chamber. An entrance or exit opening is provided at one side of the operation area frame 201 away from the refrigerated storage area 100, the sample sorting mechanism 202 and the sample rack loading mechanism 104 are configured to be in cooperation with each other to unload a to-be-unloaded sample from the refrigerated placement shelf 102 through the entrance or exit opening, and to load a to-be-loaded sample onto the refrigerated placement shelf 102 through the entrance or exit opening. The sample transport rail 300 is configured for transporting the samples, and the sample transport rail 300 is provided on one side of the refrigerated operation area 200 where the entrance or exit opening is located. The central control system is electrically connected to the sample sorting mechanism 202 and the sample rack loading mechanism 104.

In the use of the sample refrigeration storage device according to the present application, when the sample transport rail 300 transports the to-be-loaded sample to the entrance or exit opening of the refrigerated operation area 200, the central control system controls the sample sorting mechanism 202 to cooperate with the sample rack loading mechanism 104, to load the to-be-loaded sample onto the refrigerated placement shelf 102 through the entrance or exit opening; when the sample needs to be unloaded, the central control system controls the sample sorting mechanism 202 to cooperate with the sample rack loading mechanism 104, to unload the to-be-unloaded sample to the sample transport rail 300 through the entrance or exit opening. The refrigerated storage area 100 and the refrigerated operation area 200 are accessible by opening a side-by-side door structure 1011 and a door panel 2011, which facilitates fault treatment, and operation situations of the refrigerated storage area 100 and the refrigerated operation area 200 can be observed through a first transparent window 1011-a and a second transparent window 2011-a. Since the sample sorting mechanism 202 according to the present application is located in the refrigerated operation area 200, and the refrigerated operation area 200 includes the second refrigeration mechanism 203 configured for refrigerating the samples, even if a sample is stranded on the sample sorting mechanism 202, the sample is always in a low temperature environment, which reduces the situation where the sample becomes spoiled and ineffective. In addition, since the operation area frame 201 of the refrigerated operation area 200 is in communication with the storage area frame 101 of the refrigerated storage area 100 to form the closed chamber, that is, a sealed refrigerated chamber is formed, so that the heat exchange between the samples and the outside of the refrigerated storage area 100 is reduced, which further reduces the situation where sample becomes spoiled and ineffective, thereby the effectiveness and accuracy of sample testing are improved, the number of times for sample collection is reduced, and the efficiency of sample testing is improved in clinical application.

It should be noted that the above description of the working process of the central control system only intended to describe the control function of the central control system to the sample sorting mechanism 202, and the present application does not involve any improvement in the procedure and the control method, and the control function of the central control system to the sample sorting mechanism 202 belongs to the prior art.

In addition, in practical application, the first refrigeration mechanism 103 and the second refrigeration mechanism 203 may be turned on at the same time; alternatively, one of the first refrigeration mechanism 103 and the second refrigeration mechanism 203 is turned on, and the other one is used as a backup refrigeration mechanism of the sample refrigeration storage device, which reduces the risk that all the refrigeration mechanisms fail, and thereby improving the reliability of the sample refrigeration storage device.

Moreover, the refrigerated placement shelf 102 has a multi-layer structure, each layer is configured to hold multiple sample racks, and the sample racks are used to hold sample tubes containing samples. The sample tubes can be placed in layers on the refrigerated placement shelf 102, and the central control system can control a first mechanical gripper assembly 2025 described below to automatically picking up samples from the refrigerated placement shelf 102, which improves the efficiency of sample placing and taking, and thereby reducing the manual labor intensity. In a case that the sample on the refrigerated placement shelf 102 expires, the expired sample can be discarded by a sample discarding assembly 304 described below, to effectively reduce the risk of infection of medical staff.

Further, the sample rack loading mechanism 104 is provided at the one side of the operation area frame 201 close to the refrigerated storage area 100, and the sample rack loading mechanism 104 includes a fixing assembly 1041, a translation assembly 1042 and a sample rack pick-and-place assembly 1043, so as to transfer a first sample rack and a second sample rack of the sample storage assembly 2022 described below onto the refrigerated placement shelf 102 of the refrigerated storage area 100, for placing refrigeration storage samples; alternatively, to transfer the sample racks from the refrigerated placement shelf 102 to the first sample rack temporary storage area 2022-b and the second sample rack temporary storage area 2022-c of the sample storage assembly 2022, for retesting or discarding the samples.

Specifically, the fixing assembly 1041 includes a first guide rail 1041-a arranged along a first direction X, where the first guide rail 1041-a includes two linear guide rails provided parallel to each other, namely a first linear guide rail and a second linear guide rail. The translation assembly 1042 includes a second guide rail 1042-a in slidable cooperation with the first linear guide rail and the second linear guide rail, so that the translation assembly 1042 is able to move in the first direction X. The second guide rail 1042-a is arranged along a second direction Y, and the translation assembly 1042 is connected to the sample rack pick-and-place assembly 1043, so that the sample rack pick-and-place assembly 1043 is able to move along with the translation assembly 1042 in the first direction X. The translation assembly 1042 can drive the sample rack pick-and-place assembly 1043 to slide along the second guide rail 1042-a by means of rack-and-pinion transmission, so that the sample rack pick-and-place assembly 1043 is able to move in the second direction Y. The sample rack pick-and-place assembly 1043 includes a third guide rail 1043-a arranged along a third direction Z and a sample rack grabbing manipulator for grabbing and transferring the sample rack. The sample rack grabbing manipulator is provided on the third guide rail 1043-a in a slidable manner, so that the sample rack grabbing manipulator is able to move in a third direction Z, in this way, the sample rack grabbing manipulator is able to move in the first direction X, the second direction Y and the third direction Z. An included angle between any two of the first direction X, the second direction Y and the third direction Z is greater than 0° and not exceed 90°, so that a three-dimensional space can be defined by the first direction X, the second direction Y and the third direction Z, and thus the sample rack grabbing manipulator is able to move to any position in the first sample rack temporary storage area 2022-b and the second sample rack temporary storage area 2022-c described below, and any position on the refrigerated placement shelf 102 as well. In this way, after the first sample rack placed in the first sample temporary storage area and the second sample rack placed in the second sample temporary storage area reach a capacity threshold, the first sample rack and the second sample rack can be transferred to the refrigerated placement shelf 102 by the sample rack grabbing manipulator; or, when the samples need to be retested or discarded, the sample racks on the refrigerated placement shelf 102 can be transferred to the first sample temporary storage area and the second sample temporary storage area by the sample rack grabbing manipulator, and then the samples in the first sample temporary storage area and the second sample temporary storage area can be transferred to the outside of the refrigerated operation area 200 by an automatic interaction assembly 2023 described below for retesting or discarding.

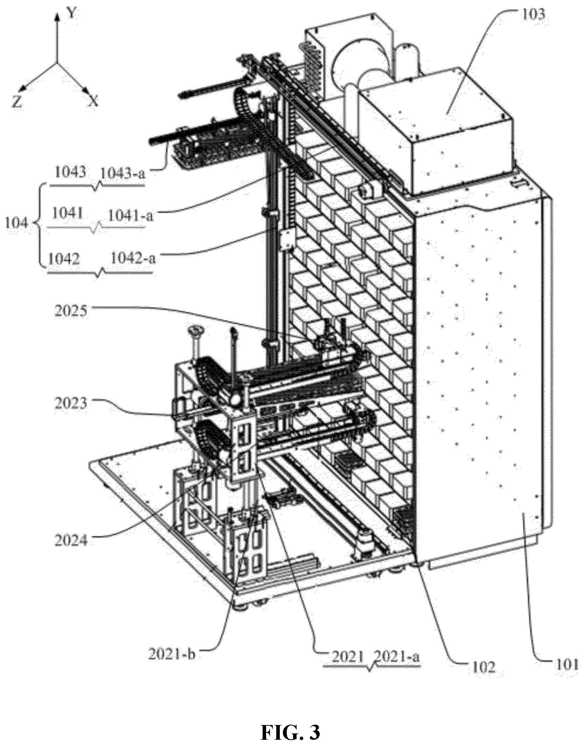

As shown in FIG. 3, the sample sorting mechanism 202 includes a lifting and carrying assembly 2021, and the lifting and carrying assembly 2021 includes an installation base frame 2021-a and a lifting drive structure 2021-b for driving the installation base frame 2021-a to move up and down, so that the installation base frame 2021-a, and the sample storage assembly 2022, the automatic interaction assembly 2023, the jacking assembly 2024 and the first mechanical gripper assembly 2025 mounted on the installation base frame 2021-a are able to move up and down together with the installation base frame 2021-a, which reserves a sample rack storage space for the sample rack loading mechanism 104 in the area where the sample sorting mechanism 202 is arranged, and thereby maximizing the sample rack storage space.

The above lifting drive structure 2021-b may employ methods of a motor and rack-and-pinion transmission, a motor and chain transmission, or a lead screw motor and nut transmission, etc., any lifting drive structures 2021-b that can drive the installation base frame 2021-a to move up and down fall within the protection scope of the present application. Preferably, the embodiment of the present application employs a first lead screw motor and nut transmission.

Specifically, the lifting drive structure 2021-b includes a base, a first lead screw motor, a guide shaft running through the installation base frame 2021-a and a linear bearing sleeved on the guide shaft, and an output lead screw of the first lead screw motor is parallel to the guide shaft. The installation base frame 2021-a is arranged on the nut of the first lead screw motor in a floating manner, to enable the nut of the first lead screw motor to drive the installation base frame 2021-a to move up and down linearly along the guide shaft. Therefore, the installation base frame 2021-a can move up and down linearly along the guide shaft, to drive the sample storage assembly 2022, the automatic interaction assembly 2023, the jacking assembly 2024 and the first mechanical gripper assembly 2025 on the installation base frame 2021-a o move up and down together with the installation base frame 2021-a.

Further, the sample sorting mechanism 202 includes a sample storage assembly 2022, where the sample storage assembly 2022 includes a support plate 2022-a, a first sample rack temporary storage area 2022-b and a second sample rack temporary storage area 2022-c provided on the support plate 2022-a. The first sample rack temporary storage area 2022-b is configured for temporarily storing the to-be-loaded samples, and the second sample rack temporary storage area 2022-c is configured for temporarily storing the to-be-unloaded samples, so that the sample refrigeration storage device can load and unload the samples at the same time.

It should be noted that the first sample rack temporary storage area 2022-b and the second sample rack temporary storage area 2022-c may be used for storing the to-be-loaded samples at the same time or for storing the to-be-unloaded samples at the same time. In practical application, the functions of the first sample rack temporary storage area 2022-b and of the second sample rack temporary storage area may be adaptively divided according to the actual storage requirements, as long as the division meets the use requirements, it falls within the protection scope of the present application.

In addition, the first sample rack temporary storage area 2022-b includes a first sample temporary storage rack for temporarily storing the to-be-loaded sample and a first information recognizer provided on the first sample temporary storage rack. The second sample rack temporary storage area 2022-c includes a second sample temporary storage rack for temporarily storing the to-be-unloaded sample and a second information recognizer provided on the second sample temporary storage rack. The first information recognizer and the second information recognizer are both electrically connected to the central control system, so that the information of the sample entering the first sample temporary storage rack is recognized by the first information recognizer and transmitted to the central control system for recording, and the information of the sample entering the second sample temporary storage rack is recognized by the second information recognizer and transmitted to the central control system for recording, thereby the destination and storage position of each sample tube are recorded by the central control system.

The above first information recognizer and the second information recognizer may perform recognition by recognizing a bar code, a two-dimensional code or a chip, etc., any manners that can recognizing the information of the sample in the sample tube fall within the protection scope of the present application. Preferably, each of the first information recognizer and the second information recognizer according to the embodiment of the present application is a RFID recognizer.

Further, the sample sorting mechanism 202 further includes an automatic interaction assembly 2023 configured for transporting the to-be-loaded sample into and the to-be-unloaded sample out of the refrigerated storage area 200, so as to realize interaction between the samples inside and outside the sample refrigeration storage device.

It should be noted that the automatic interaction assembly 2023 may employ a belt transmission, a chain transmission or a rack-and-pinion transmission, etc., to realize the interaction between the samples inside and outside the sample refrigeration storage device, any transmission manners which can realize the interaction between the samples fall within the protection scope of the present application. Preferably, a synchronous belt transmission is employed according to the embodiment of the present application, which has a precise transmission ratio.

Specifically, the automatic interaction assembly 2023 includes an interactive drive motor, an interactive driving wheel connected to an output shaft of the interactive drive motor, an interactive driven wheel, an interactive belt connecting the interactive driving wheel and the interactive driven wheel, an interactive installation plate connected to the interactive belt, an interactive slider connected to the interactive installation plate, and an interactive guide rail in sliding fit with the interactive slider. The interactive drive motor drives the interactive driving wheel to rotate, the interactive belt rotates in a closed loop between the interactive driving wheel and the interactive driven wheel, and the interactive installation plate can move along with the interactive belt. A sample interaction placement shelf for placing samples is provided at one end of the interactive installation plate close to the entrance or exit opening, so that the sample interaction placement shelf reciprocates with the interactive installation plate, to realize loading and unloading of the samples.

In addition, the sample sorting mechanism 202 further includes a jacking assembly 2024 for pushing up the sample tubes and a first mechanical gripper assembly 2025 for grabbing and transferring the sample tube. The jacking assembly 2024 and the first mechanical gripper assembly 2025 are located in the operation area frame 201, so that the sample tube can be pushed up by the jacking assembly 2024, thereby improving the compatibility of the sample refrigeration storage device for sample tubes of different height specifications. The pushed-up sample tube is transferred to the sample interaction placement shelf of the automatic interaction assembly 2023 by the first mechanical gripper assembly 2025, or the sample tubes located on the sample interaction placement shelf are transferred to the first sample rack temporary storage area 2022-b and the second sample rack temporary storage area 2022-c of the sample storage assembly 2022 by the first mechanical gripper.

It should be noted that the jacking assembly 2024 may employ a belt transmission, a chain transmission or a rack-and-pinion transmission, etc., any transmission manners that can push up the sample tube fall within the protection scope of the present application. Preferably, a synchronous belt transmission is employed in the embodiment of the present application, which has a precise transmission ratio.

In addition, the first mechanical gripper assembly 2025 may be of a cam type, a double slider type or a double hydraulic rod type, etc., and any types that can grab and transfer the sample tube fall within the protection scope of the present application. Preferably, in the embodiment of the present application, the first mechanical gripper assembly 2025 is the cam type, so that the opening degree of the first mechanical gripper can be adjusted through the rotation of the cam, and thus the first mechanical gripper assembly 2025 is able to grab the sample tubes of different diameter specifications, which improves the compatibility of the sample refrigeration storage device for the sample tube specifications.

Further, the sample sorting mechanism 202 includes a second mechanical gripper assembly 2026 located at an outer side of the operation area frame 201, and the second mechanical gripper assembly 2026 is located above the sample transport rail 300, so that the sample tubes on the sample transport rail 300 can be grabbed by the second mechanical gripper assembly 2026 and transferred to the sample interaction placement shelf of the automatic interaction assembly 2023, and then transferred to the sample storage assembly 2022 by the automatic interaction assembly 2023; alternatively, the sample tubes on the sample interaction placement shelf can be grabbed and transferred to the sample transport rail 300 by the second mechanical gripper assembly 2026 for retesting or discarding.

The second mechanical gripper assembly 2026 may be of a cam type, a double slider type or a double hydraulic rod type, etc., and any types that meet the usage requirements fall within the protection scope of the present application. Preferably, in the embodiment of the present application, the second mechanical gripper assembly 2026 is the cam type, and thus the opening degree of gripping fingers described below may be adjusted by the cam, to enable the gripping fingers to grab the sample tubes of different diameter specifications, which improves the compatibility of the sample refrigeration storage device for the sample tube specifications.

Specifically, the second mechanical gripper assembly 2026 includes a gripper structure 2026-a, a lifting structure 2026-b for driving the gripper structure 2026-a to move up and down, and a rotating structure 2026-c for driving the gripper structure 2026-a to rotate. The gripper structure 2026-a includes gripping fingers that can open and close, a cam for driving the gripping fingers to open and close, and a gripping finger driver for driving the cam to rotate, so that the cam is driven to rotate by the gripping finger driver, and the gripping fingers are driven to open and close through the rotation of the cam, to enable the gripping fingers to grab the sample tube. The lifting structure 2026-b drives the gripper structure 2026-a to move up and down, and the rotating structure 2026-c drives the gripper structure 2026-a to rotate, to make the gripper structure 2026-a can grab and transfer the sample tube through a series of actions such as moving up, rotating, moving down, grabbing, moving up, rotating and moving down.

Further, the refrigerated operation area 200 includes an automatic door opening and closing mechanism 204 arranged at the entrance or exit opening of the operation area frame 201, to improve the sealing performance of the refrigerated operation area 200, reduce heat exchange between the refrigerated operation area 200 and the external environment, which improves the refrigeration effect of the samples, and thereby reduce the situation of sample failure.

Specifically, the automatic door opening and closing mechanism 204 includes a second lead screw motor 2041, a guide plate 2042, a driving slide rail 2043, a driven slide rail 2044, a sealing door body 2045 and a rotating member 2046.

The second lead screw motor 2041 is electrically connected to the central control system, to enable the second lead screw motor 2041 to be started according to an instruction of the central control system, so that the sealing door body 2045 can be automatically opened and closed. The driven slide rail 2044 is provided on a nut of the second lead screw motor 2041, so that the driven slide rail 2044 can reciprocate linearly along with the nut of the second lead screw motor 2041. The driven slide rail 2044 is slidably connected to the driving slide rail 2043 via a driving slider, so that the driving slide rail 2043 can guide the driven slide rail 2044, to improve the accuracy of the motion trajectory of the driven slide rail 2044. A length direction of the driving slide rail 2043 and a length direction of a lead screw of the lead screw motor are provided in a fourth direction α, to enable the driven slide rail 2044 to move in the fourth direction α. A driven slider is slidably provided on the driven slide rail 2044, and the sealing door body 2045 is arranged at one side of the driven slider, so that the sealing door body 2045 can move along with the driven slide rail 2044 in the fourth direction α. A length direction of the driven slide rail 2044 is provided in a fifth direction β, to enable the sealing door body 2045 to move in the fifth direction β. An included angle between the fourth direction α and the fifth direction β is greater than 0° and not exceed 90°, so that the sealing door body 2045 is able to move in a two-dimensional plane defined by the fourth direction α and the fifth direction β. The guide plate 2042 is provided with a guide groove corresponding to an opening and closing trajectory of the sealing door body 2045, and the rotating member 2046 is arranged at one side of the driven slider away from the sealing door body 2045. The rotating member 2046 is able to slide along the guide groove, to enable the rotating member 2046 to drive the sealing door body 2045 to slide along the guide groove, so as to realize the automatic opening and closing of the sealing door body 2045.

It should be noted that the included angle between the fourth direction α and the fifth direction β is not specifically limited in the present application, any included angles that can define a two-dimensional plane fall within the protection scope of the present application. Preferably, the included angle between the fourth direction α and the fifth direction β is 90° according to the embodiment of the present application, which is convenient to set.

The sample transport rail 300 according to the present application includes a sample feeding rail 301, an empty holder buffer rail 302, a third information recognizer 303 and a sample discarding assembly 304. The sample feeding rail 301 is provided parallel to a side wall of the operation area frame 201, and is configured for receiving and transporting a sample holder with sample tube, so as to transmit the sample holder to a pick-and-place position of the sample transport rail 300. The empty holder buffer rail 302 is configured for receiving and buffering an empty sample holder, where the sample tube has been removed, on the sample feeding rail 301. The third information recognizer 303 is configured for recognizing sample information, the sample tube is provided with a sample label for displaying the sample information, and the sample holder is provided with a sample holder label for displaying sample holder information. The third information recognizer 303 can read and bind the sample label and sample holder label, so as to transmit the read sample information and sample holder information to the central control system, and determine information such as sample destination and sample tube specifications. The sample discarding assembly 304 is configured for collecting discarded samples.

In addition, the sample discarding assembly 304 may include a single discarding position, two discarding positions or multiple discarding positions, etc., any structures being convenient for collecting discarded samples fall within the protection scope of the present application. In specific application, the second mechanical gripper assembly 2026 is controlled by the central control system to grab and transfer the sample tubes to be discarded form the sample transport rail 300, and the sample discarding assembly 304 receives and collects the discarded samples.

Further, a door panel 2011 is arranged at one side of the operation area frame 201, so that when a fault occurs inside the refrigerated operation area 200 or the refrigerated storage area 100, the refrigerated operation area 200 and the refrigerated storage area 100 are accessible by opening the door panel 2011, which facilitates fault treatment and maintenance. The door panel 2011 is provided with a second transparent window 2011-a, and it is convenient for observing the operation states of the mechanisms inside the refrigerated operation area 200 and the refrigerated storage area 100 through the second transparent window 2011-a.

In addition, a side-by-side door structure 1011 is provided at one side of the storage area frame 101, and thus the side-by-side door structure 1011 can be opened for fault repair and maintenance of the mechanisms in the refrigerated storage area 100 or for taking our or placing the sample tubes in bulk. The side-by-side door structure 1011 is provided with a first transparent window 1011-a, and it is convenient for observing the internal states of the refrigerated storage area 100 and the refrigerated operation area 200 through the first transparent window 1011 -a.

In addition, a sample workflow analysis system is also provided according to the present application, which includes the sample refrigeration storage device according to any one of the above solutions, and thus has all the technical effects of the above sample refrigeration storage device, and the details are not repeated here.

The terms such as "first", "second" and the like in the specification, claims, and accompanying drawings of the present application are intended to distinguish different objects rather than describe a particular sequence. In addition, the terms "include", "have" and any variations thereof are intended to cover the non-exclusive inclusion. For example, a process, method, system, product, or device that includes a series of steps or units is not limited to the listed steps or units, but may include steps or units that are not listed.

Based on the above description of the disclosed embodiments, those skilled in the art are capable of carrying out or using the present application. It is obvious for those skilled in the art to make many modifications to these embodiments. The general principle defined herein may be applied to other embodiments without departing from the scope of the present application. Therefore, the present application is not limited to the embodiments illustrated herein, but should be defined by the broadest scope consistent with the principle and novel features disclosed herein.

## Claims

1. A sample refrigeration storage device, comprising:
a refrigerated storage area, comprising a storage area frame, a refrigerated placement shelf and a first refrigeration mechanism configured for refrigerating samples, wherein the refrigerated placement shelf is arranged in the storage area frame;
a refrigerated operation area, comprising an operation area frame being in communication with the storage area frame, a sample sorting mechanism configured for sorting and transferring the samples, a sample rack loading mechanism configured for transferring a sample rack, and a second refrigeration mechanism configured for refrigerating the samples; wherein the operation area frame and the storage area frame are in communication with each other to form a closed chamber, an entrance or exit opening is provided at one side of the operation area frame away from the refrigerated storage area, and the sample sorting mechanism and the sample rack loading mechanism are configured to be in cooperation with each other to unload a to-be-unloaded sample from the refrigerated placement shelf through the entrance or exit opening, and to load a to-be-loaded sample onto the refrigerated placement shelf through the entrance or exit opening;
a sample transport rail configured for transporting the samples, and the sample transport rail is provided on one side of the refrigerated operation area where the entrance or exit opening is located; and
a central control system being electrically connected to the sample sorting mechanism and the sample rack loading mechanism.

2. The sample refrigeration storage device according to claim 1, wherein
the sample rack loading mechanism is arranged at one side of the operation area frame close to the refrigerated storage area, and the sample rack loading mechanism comprises a fixing assembly, a translation assembly and a sample rack pick-and-place assembly; and wherein
the fixing assembly comprises a first guide rail provided along a first direction, and the first guide rail comprises two linear guide rails being parallel to each other, namely a first linear guide rail and a second linear guide rail;
the translation assembly comprises a second guide rail being in slidable cooperation with the first linear guide rail and the second linear guide rail, the second guide rail is provided along a second direction, and the translation assembly is connected to the sample rack pick-and-place assembly, the translation assembly is configured to drive the sample rack pick-and-place assembly to slide along the second guide rail; and
the sample rack pick-and-place assembly comprises a third guide rail provided along a third direction and a sample rack grabbing manipulator for grabbing and transferring the sample rack, and the sample rack grabbing manipulator is arranged on the third guide rail in a slidable manner; and wherein
an included angle between any two of the first direction, the second direction and the third direction is greater than 0° and smaller than or equal to 90°.

3. The sample refrigeration storage device according to claim 1, wherein the sample sorting mechanism comprises a lifting and carrying assembly, and the lifting and carrying assembly comprises an installation base frame and a lifting drive structure for driving the installation base frame to move up and down.

4. The sample refrigeration storage device according to claim 1, wherein the sample sorting mechanism further comprises a sample storage assembly, wherein the sample storage assembly comprises a support plate, a first sample rack temporary storage area and a second sample rack temporary storage area both provided on the support plate.

5. The sample refrigeration storage device according to claim 4, wherein the first sample rack temporary storage area comprises a first sample temporary storage rack configured for temporarily storing the to-be-loaded sample and a first information recognizer provided on the first sample temporary storage rack; the second sample rack temporary storage area comprises a second sample temporary storage rack configured for temporarily storing the to-be-unloaded sample and a second information recognizer provided on the second sample temporary storage rack; and wherein the first information recognizer and the second information recognizer are both electrically connected to the central control system.

6. The sample refrigeration storage device according to claim 1, wherein the sample sorting mechanism further comprises an automatic interaction assembly configured for transporting the to-be-loaded sample into and the to-be-unloaded sample out of the refrigerated storage area.

7. The sample refrigeration storage device according to claim 6, wherein the automatic interaction assembly comprises an interactive drive motor, an interactive driving wheel being connected to an output shaft of the interactive drive motor, an interactive driven wheel, an interactive belt connecting the interactive driving wheel and the interactive driven wheel, an interactive installation plate being connected to the interactive belt, an interactive slider connected to the interactive installation plate, and an interactive guide rail being in sliding fit with the interactive slider, wherein a sample interaction placement shelf for placing the samples is provided at one end of the interactive installation plate close to the entrance or exit opening.

8. The sample refrigeration storage device according to claim 1, wherein the sample sorting mechanism further comprises a jacking assembly configured for pushing up a sample tube and a first mechanical gripper assembly configured for grabbing and transferring the sample tube, wherein the jacking assembly and the first mechanical gripper assembly are located in the operation area frame.

9. The sample refrigeration storage device according to claim 1, wherein the sample sorting mechanism further comprises a second mechanical gripper assembly being arranged at an outer side of the operation area frame, and the second mechanical gripper assembly is located above the sample transport rail.

10. The sample refrigeration storage device according to claim 9, wherein the second mechanical gripper assembly comprises a gripper structure, a lifting structure for driving the gripper structure to move up and down, and a rotating structure for driving the gripper structure to rotate, wherein the gripper structure comprises gripping fingers configured to open and close, a cam configured for driving the gripping fingers to open and close, and a gripping finger driver configured for driving the cam to rotate.

11. The sample refrigeration storage device according to claim 1, wherein the refrigerated operation area further comprises an automatic door opening and closing mechanism arranged at the entrance or exit opening of the operation area frame.

12. The sample refrigeration storage device according to claim 11, wherein the automatic door opening and closing mechanism comprises a second lead screw motor, a guide plate, a driving slide rail, a driven slide rail, a sealing door body and a rotating member; and wherein
the second lead screw motor is electrically connected to the central control system, the driven slide rail is provided on a nut of the second lead screw motor, and the driven slide rail is slidably connected to the driving slide rail via a driving slider, a length direction of the driving slide rail and a length direction of a lead screw of the lead screw motor are provided along a fourth direction;
a driven slider is slidably provided on the driven slide rail, and the sealing door body is arranged at one side of the driven slider, a length direction of the driven slide rail is provided along a fifth direction, and an included angle between the fourth direction and the fifth direction is greater than 0° and smaller than or equal to 90°; and
the guide plate is provided with a guide groove corresponding to an opening and closing trajectory of the sealing door body, and the rotating member is arranged at one side of the driven slider away from the sealing door body, and the rotating member is allowed to slide along the guide groove.

13. The sample refrigeration storage device according to claim 1, wherein
the sample transport rail comprises a sample feeding rail configured for receiving and transporting a sample holder with sample tube, an empty holder buffer rail configured for buffering an empty sample holder, a third information recognizer configured for recognizing sample information, and a sample discarding assembly configured for collecting discarded samples; and wherein
the sample tube is provided with a sample recognition code for displaying the sample information, and the sample holder is provided with a sample holder recognition code for displaying sample holder information; the third information recognizer is configured to read and bind the sample label and the sample holder label, and the information recognizer is electrically connected to the central control system.

14. A sample workflow analysis system, comprising the sample refrigeration storage device according to any one of claims 1 to 13.
